# EUROPEAN PATENT APPLICATION

(11) **EP 3 838 572 A1**
(43) Date of publication of application: **23.06.2021**
(21) Application number: 19306723.8
(22) Date of filing: 20.12.2019
(51) Int. Cl.: B29D 11/00

(54) **AN OPHTHALMIC LENS, AN EYEWEAR COMPRISING THE OPHTHALMIC LENS, AND A METHOD OF COATING AN EDGE SURFACE OF AN OPHTHALMIC LENS**

(71) Applicant: ESSILOR INTERNATIONAL, 94220 Charenton-Le-Pont (FR)
(72) Inventor: ROUSSEL, Laurent, 94220 Charenton le Pont (FR)
(74) Representative: Jacobacci Coralis Harle

(57) **Abstract**

An ophthalmic lens comprising a first optical surface, an opposing second optical surface, and an edge surface connecting the first optical surface and the second optical surface is provided. The ophthalmic lens further comprises a coating material disposed on a central portion of the edge surface and on 50 % or less of a perimeter portion of the edge surface abutting one or both of the first optical surface and the second optical surface. An eyewear comprising an eyewear frame and the ophthalmic lens, and a method of coating an edge surface of an ophthalmic lens, are also provided.

## Description

### TECHNICAL FIELD

This disclosure relates generally to an ophthalmic lens, an eyewear comprising the ophthalmic lens, and a method of coating an edge surface of an ophthalmic lens.

### BACKGROUND

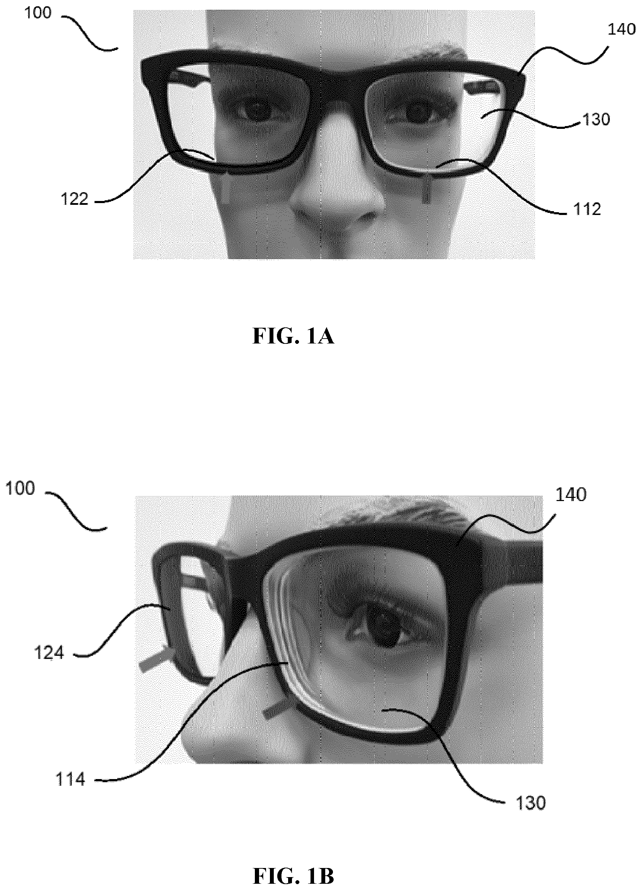

A coating material may be introduced on the edge of an ophthalmic lens as an edge coating for various reasons. For example, an opaque coating may be deposited on the edge of an ophthalmic lens to reduce visibility of myopia rings and white rings for aesthetic purposes. Examples of a white ring and a myopia ring are shown in **FIG. 1A** and **FIG. 1B** as 112 and 114, respectively. The myopia rings and white rings may result due to internal reflection of light through the ophthalmic lens. For effective reduction in visibility of the myopia rings and white rings, the edge coating should have good opacity, finishing, mechanical, and adhesion properties to allow masking of the myopia rings and white rings.

To this end, an operator may apply the coating material on the edge of an ophthalmic lens using a marker pen or a brush, or by spray coating. Ideally, the coating material is applied onto the edge surface of the ophthalmic lens only, without any of the coating material being coated on the optical surfaces of the ophthalmic lens. In applying the coating material, the white ring and the myopia ring may be masked so that they are less noticeable than before. The edge color is generally of a single color and chosen to match the frame color. Example of an edge surface of the ophthalmic lens having a coating material disposed thereon so as to mask the white ring and the myopia ring are shown in **FIG. 1A** and **FIG. 1B** as 122 and 124, respectively.

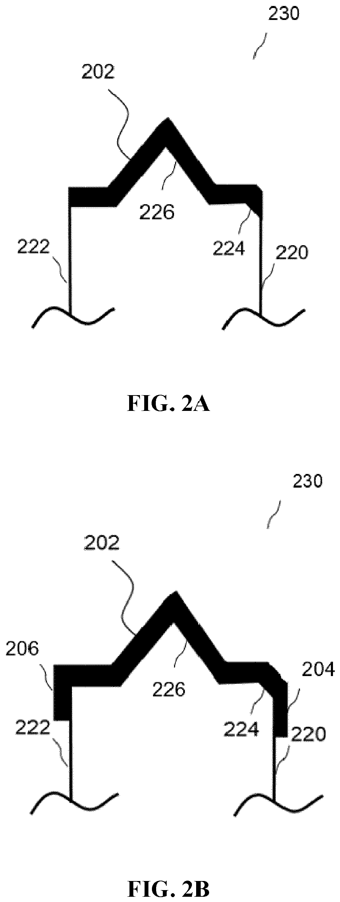

For illustration purposes, **FIG. 2A** is a schematic diagram showing an edge coating 202 disposed on an edge surface of an ophthalmic lens 230 according to an embodiment. The edge surface of the ophthalmic lens 230 is defined by the surface connecting the first optical surface 220 and the second optical surface 222. The edge surface of the ophthalmic lens 230 comprises a lens bevel 226 and a safety bevel 224. As depicted in the figure, there is no overflow on the first optical surface 220 and the second optical surface 222 of the ophthalmic lens 230.

Notwithstanding the above, the operator often finds himself or herself in a situation whereby he or she accidentally introduces some excess coating, otherwise termed herein as overflow, on the optical surfaces. This is depicted in **FIG. 2B****,** which is a schematic diagram showing an edge coating 202 disposed on an edge surface of an ophthalmic lens 230. As shown in the figure, there is overflow in the form of excess coating material 204, 206 disposed respectively on the first optical surface 220 and the second optical surface 222 of the ophthalmic lens 230. These overflows are removed completely so as not to compromise aesthetics of the ophthalmic lens. In embodiments wherein an optical lens edge comprises multiple facets, such as safety bevels for example, it is very difficult to ensure complete coating coverage on each and every facet, while not introducing overflows on the optical surfaces.

Processes to protect the optical surfaces from overflow may involve adhering a plastic film on an optical surface prior to disposing the coating material on the edge surface. In so doing, any overflow of the coating material on the optical surface may subsequently be removed by peeling off the plastic film. In some cases, a plastic film is not used and the coating material is allowed to overflow onto one or both the optical surfaces. An operator subsequently removes the overflow manually using solvent, soft goods etc. These processes are costly and complex, as extra care is required to remove the overflow without damaging the lenses and/or coating on the edge surface, which may come about due to scratches introduced during cleaning, thereby affecting quality of the finished lenses.

With the above in mind, various embodiments disclosed herein are directed towards an improved ophthalmic lens, an eyewear, and a method of coating an edge surface of an ophthalmic lens which resolve or at least alleviate one or more of the above-mentioned problems. Resolving or alleviating the one or more problems may be achieved by characteristics described in the claims.

### SUMMARY

This summary does not list all necessary characteristics, and therefore, sub-combinations of these characteristics may also constitute an invention.

In a first aspect defined by claim 1, there is provided an ophthalmic lens comprising a first optical surface, an opposing second optical surface, and an edge surface connecting the first optical surface and the second optical surface, the ophthalmic lens further comprising a coating material disposed on a central portion of the edge surface and on 50 % or less of a perimeter portion of the edge surface abutting one or both of the first optical surface and the second optical surface.

Other aspects of the invention are defined in claims 2 to 15.

In a second aspect, there is provided an eyewear comprising an eyewear frame and an ophthalmic lens according to the first aspect.

In a third aspect, there is provided a method of coating an edge surface of an ophthalmic lens, the method comprising providing an ophthalmic lens comprising a first optical surface, an opposing second optical surface, and an edge surface connecting the first optical surface and the second optical surface; and either
a) disposing a coating material on the edge surface, and physically working a perimeter portion of the edge surface abutting one or both of the first optical surface and the second optical surface so that 50 % or less of the perimeter portion comprises the coating material, or
b) disposing a coating material on a central portion of the edge surface only.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.

**FIG. 1A** is a photograph showing front view of a user wearing an eyewear 100. A white ring 112 is shown. Also shown is a corresponding edge surface 122 of the ophthalmic lens 130, which was coated with a coating material to reduce visibility of a white ring that would otherwise be present. The color of the coating material was chosen to match the color of the eyewear frame 140.

**FIG. 1B** is a photograph showing side view of a user wearing an eyewear 100. A myopia ring 114 is shown. Also shown is a corresponding edge surface 124 of the ophthalmic lens 130, which was coated with a coating material to reduce visibility of a myopia ring that would otherwise be present. The color of the coating material was chosen to match the color of the eyewear frame 140.

**FIG. 2A** is a schematic diagram showing an edge coating 202 disposed on an edge surface of an ophthalmic lens 230 according to an embodiment. The edge surface of the ophthalmic lens 230 is defined by the surface connecting the first optical surface 220 and the second optical surface 222. The first optical surface 220 and the second optical surface 222 may respectively be a concave (Cc) surface and a convex (Cx) surface of the ophthalmic lens 230. The edge surface of the ophthalmic lens 230 comprises a lens bevel 226 and a safety bevel 224. As depicted in the figure, there is no overflow on the first optical surface 220 and the second optical surface 222 of the ophthalmic lens 230.

**FIG. 2B** is a schematic diagram showing an edge coating 202 disposed on an edge surface of an ophthalmic lens 230 according to an embodiment. The edge surface of the ophthalmic lens 230 is defined by the surface connecting the first optical surface 220 and the second optical surface 222. The first optical surface 220 and the second optical surface 222 may respectively be a concave (Cc) surface and a convex (Cx) surface of the ophthalmic lens 230. The edge surface of the ophthalmic lens 230 comprises a lens bevel 226 and a safety bevel 224. As depicted in the figure, there is overflow in the form of excess coating material 204, 206 disposed respectively on the first optical surface 220 and the second optical surface 222 of the ophthalmic lens 230.

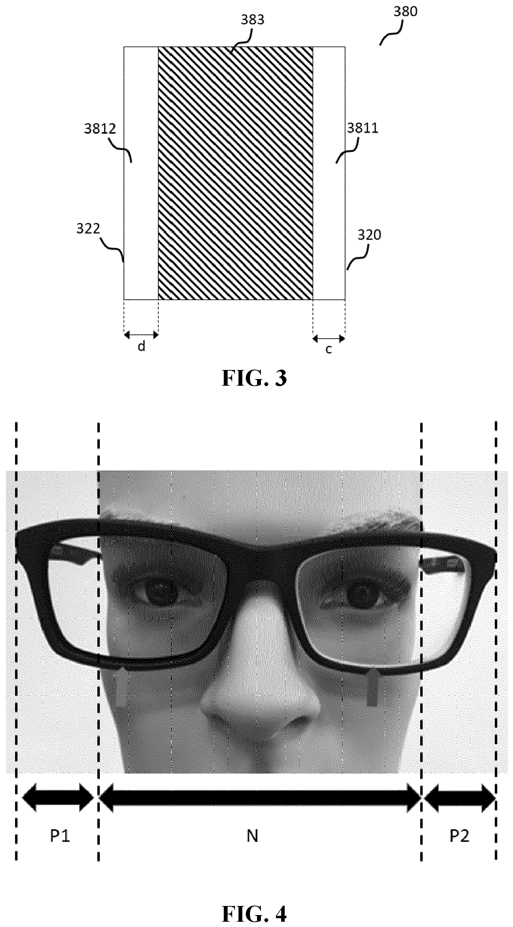

**FIG. 3** is a schematic diagram of an edge surface 380 of an ophthalmic lens according to an embodiment. As shown, the edge surface is divided into a perimeter portion formed of two parts 3811 and 3812 and a central portion 383. The two parts 3811 and 3812 making up the perimeter portion are present on the edge surface abutting a first optical surface 320 and a second optical surface 322. The perimeter portion part 3811 is offset by distance c from the edge of the edge surface abutting the first optical surface 320, while perimeter portion part 3812 is offset by distance d from the edge of the edge surface abutting the second optical surface 322. Distance c and d may be the same or different, and may further be the same or different along the perimeter of the ophthalmic lens face.

**FIG. 4** is a photograph illustrating definition of portion of edge surface proximal to the nasal side of the eyewear shown by "N" and portion of edge surface proximal to the temporal side of the eyewear shown by "P1" and "P2".

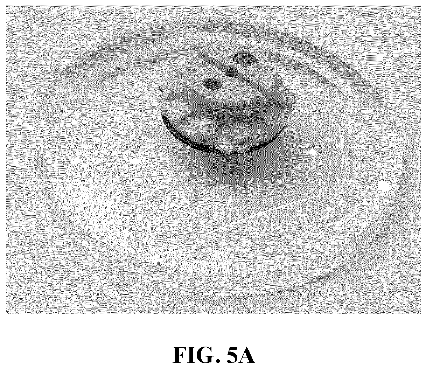

**FIG. 5A** is a photograph showing a posiblock, which is a consumable used in a lens edging process to hold the lens, so that edging may be carried out on the lens for lens shaping. As disclosed herein, it may also be used as a positional reference for improved accuracy during chamfering of the lens to form a safety bevel after an edge coating is formed on the lens.

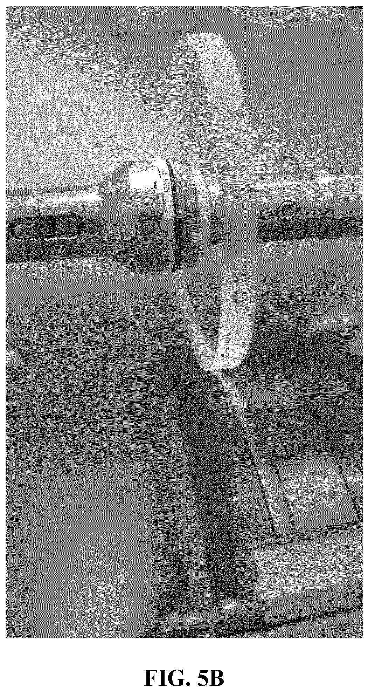

**FIG. 5B** is a photograph showing a lens edging tool. An ophthalmic lens is clamped or held in place by a posiblock to allow edging of the lens to be carried out. The lens edging tool may also be used to form safety bevel on the ophthalmic lens after an edge coating is formed on the lens.

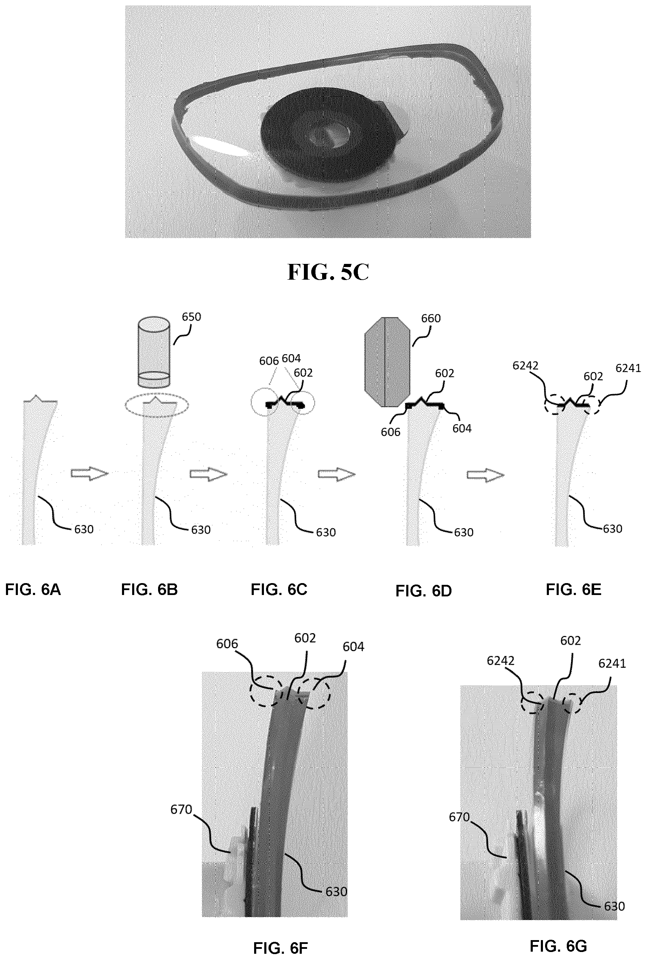

**FIG. 5C** is a photograph showing an ophthalmic lens having a coating material disposed on an edge surface of the ophthalmic lens, and which is arranged on a posiblock. The lens has been edged to achieve a specific shape for fitting within an eyewear frame, and an edge coating was applied to the edge surface of the ophthalmic lens. As shown, overflow is present on the optical surfaces which needs to be removed, and safety bevel has not yet been formed on the lens.

**FIG. 6A** to **FIG. 6E** are schematic diagrams showing a method of coating an edge surface of an ophthalmic lens, as disclosed herein. A cross-sectional view of the ophthalmic lens is depicted. **FIG. 6A** shows an ophthalmic lens 630. In **FIG. 6B****,** a coating applicator 650 is used to apply a coating material onto an edge surface of the ophthalmic lens 630 to result in formation of an edge coating 602 on the edge surface of the ophthalmic lens 630, with overflows 604 and 606 on the respective first optical surface and second optical surface of the ophthalmic lens 630 as shown in **FIG. 6C****.** A chamfering tool 660 is used to remove the overflows 604 and 606, while forming safety bevels on the ophthalmic lens 630 as shown in **FIG. 6D. FIG. 6E** shows an ophthalmic lens 630 comprising the edge coating 602, in which the overflows 604 and 606 have been removed, and safety bevels 6241 and 6242 are formed at the perimeter portion of the edge surface abutting the optical surfaces. **FIG. 6F** is a photograph corresponding to **FIG. 6C****,** showing an ophthalmic lens 630 which is held in place by a posiblock 670. An edge coating 602 was applied to the ophthalmic lens 630, and overflows 604 and 606, which resulted from the edge coating process, were formed. **FIG. 6G** is a photograph corresponding to **FIG. 6E****.** Safety bevels 6241 and 6242 are formed at the perimeter portion of the edge surface abutting the optical surfaces of the ophthalmic lens 630 following a chamfering process to remove the overflows 604 and 606.

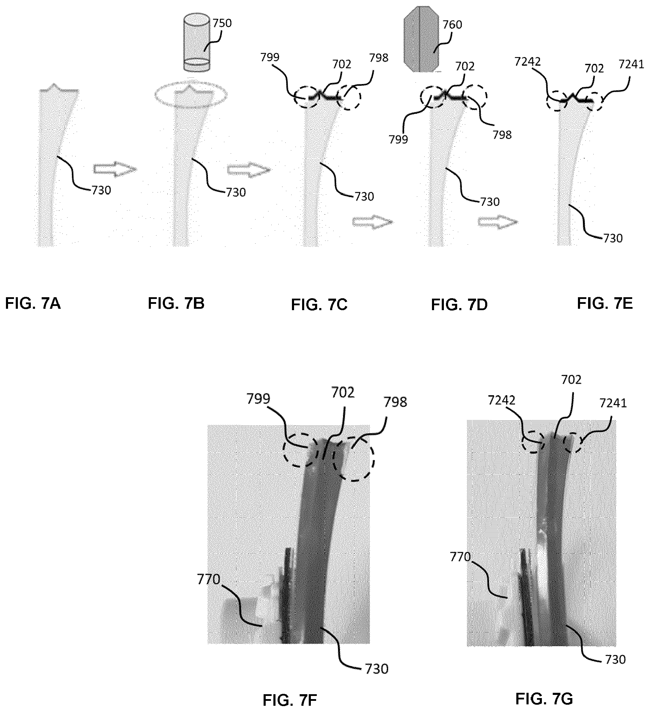

**FIG. 7A** to **FIG. 7E** are schematic diagrams showing a method of coating an edge surface of an ophthalmic lens, as disclosed herein. **FIG. 7A** shows an ophthalmic lens 730. In **FIG. 7B****,** a coating applicator 750 is used to apply a coating material onto an edge surface of the ophthalmic lens 730 to result in formation of an edge coating 702 on the edge surface of the ophthalmic lens 730. The edge surface is undercoated, meaning that the coating material is not completely coated on the edge surface. For example, the coating material may be disposed on a central portion of the edge surface, and only partially on the perimeter portion of the edge surface at circled regions 798 and 799, as shown in **FIG. 7C****.** A chamfering tool 760 is used to form safety bevels on the ophthalmic lens 730 at regions 798 and 799 as shown in **FIG. 7D. FIG. 7E** shows an ophthalmic lens 730 comprising the edge coating 702 and safety bevels 7241 and 7242 formed at the perimeter portion of the edge surface abutting the optical surfaces. **FIG. 7F** is a photograph corresponding to **FIG. 7C****,** showing an ophthalmic lens 730 which is held in place by a posiblock 770. An edge coating 702 was applied to the ophthalmic lens 730. There was undercoating of the edge surface at perimeter regions 798 and 799 of the edge surface. **FIG. 7G** is a photograph corresponding to **FIG. 7E****.** Safety bevels 7241 and 7242 were formed at the perimeter portion of the edge surface abutting the optical surfaces of the ophthalmic lens 730 following a chamfering process to remove the undercoated regions 798 and 799.

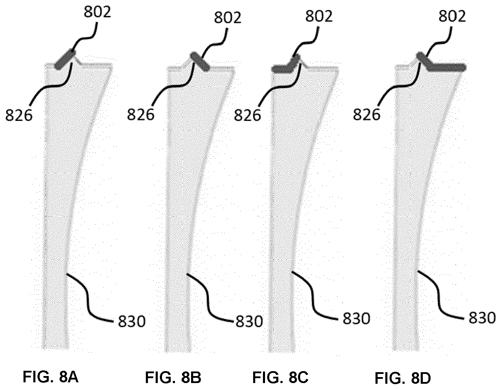

**FIG. 8A** to **FIG. 8D** are schematic diagrams showing edge coating which only partially covers an edge surface of an ophthalmic lens 830 according to embodiments disclosed herein. **FIG. 8A** and **FIG. 8B** show an ophthalmic lens 830, whereby an edge coating 802 is only present on a lens bevel 826 of the ophthalmic lens 830, i.e. a central portion of the edge surface only and is not present on the perimeter portion. **FIG. 8C** and **FIG. 8D** show an ophthalmic lens 830, whereby an edge coating 802 is present on both a central portion and partially on a perimeter portion of the edge surface abutting one or both the first optical surface and the second optical surface.

### DESCRIPTION

In the description which follows, the drawing figures are not necessarily to scale and certain features may be shown in generalized or schematic form in the interest of clarity and conciseness or for informational purposes. In addition, although making and using various embodiments are discussed in detail below, it should be appreciated that as described herein are provided many inventive concepts that may be embodied in a wide variety of contexts.

Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

Various embodiments described herein provide a method of coating an edge surface of an ophthalmic lens for purpose of reducing visibility of myopia rings. Embodiments disclosed herein are able to simplify process of coloring the edge of a lens, and may generally be applied to lenses that allow edging, milling, and/or machining.

Advantageously, it has been found by the inventors that visibility of myopia rings may still be effectively reduced if only a small portion of the edge surface of an ophthalmic lens is left uncoated. This runs contrary to conventional practice of ensuring that the edge surface is fully and uniformly covered from edge to edge so as to reduce visibility of myopia rings. In the case for medium to low myopia situations, for example, the appearance of myopia rings may still be acceptable. For some lenses such as piano lenses, absence of an edge-to-edge coating may greatly simplify the process.

As disclosed herein, the edge surface of an ophthalmic lens may not be fully covered with the coating material, and may instead have a thin uncovered area in the perimeter portion of the edge surface abutting one or both of the first optical surface and the second optical surface. The thin uncovered area may have a width in the range of about 0.1 mm to about 1 mm, for example, when measured from an edge abutting a respective optical surface.

The thin uncovered area may be intentionally formed, for example, and may comprise or correspond to a safety bevel of the ophthalmic lens. In other words, in embodiments wherein a safety bevel is present, the coating material is not present on and/or does not cover the safety bevel. The safety bevel may be formed on the edge surface of the ophthalmic lens after the edge coating process has been carried out. Since the overflows are likely to keep within limits that allow their removal through formation of the safety bevels, this reduces or eliminates any overflows on the optical surfaces. It follows that use of temporary protective layers for protecting the optical surfaces from overflow may not be required.

As further examples, it may be possible to only cover the edge surface of an ophthalmic lens which is more visible to a viewer, such as edge surface of a negative lens that is proximal to a temporal side and/or a nasal side of an eyewear arranged to accommodate the ophthalmic lens, or edge surface of a positive lens that is proximal to an upper side and/or a lower side of an eyewear arranged to accommodate the ophthalmic lens, while leaving the other areas uncovered. The areas identified to be coated mentioned above are generally thicker hence more visible to a viewer. This may have the effect that reduction in visibility of myopia rings is not affected unduly even though only a portion of the edge surface is coated.

Advantageously, methods disclosed herein may be carried out in a simple manner, and may be integrated into existing processes easily. Process of applying color to the edge surface may be further simplified since the edge surface would have less facets when applying the coating material given the absence of safety bevel, since the safety bevel, if present, are only formed later after the coating material is applied. Aesthetic continuity of color at the edges may also be maintained.

With the above in mind, various embodiments refer in a first aspect to an ophthalmic lens. The term "ophthalmic lens" refers to any type of lens intended to be supported by a wearer's face in the form of an eyewear, whereby the term "eyewear" refers generally to items and accessories worn on or over the eyes, which may be for purposes of improving or enhancing visual acuity, for protecting against the environment, for fashion, or for adornment. Examples of eyewear may include eyeglasses, goggles, or other objects on or worn over the eyes, or head-mounted devices. Eyeglasses, also termed herein as glasses or spectacles, may include sunglasses, prescription glasses, prescription sunglasses, transitional glasses, reading glasses, safety glasses, novelty glasses, costume glasses, 3D glasses, fashion glasses, and the like.

Examples of ophthalmic lens include non-corrective lenses, semi-finished lens blanks, and corrective lenses, such as progressive addition lenses, unifocal or multifocal lenses. The term may also include one or more of prescription, non-prescription, reflective, anti-reflective, magnifying, polarizing, filtering, anti-scratch, colored, tinted, clear, anti-fogging, ultraviolet (UV) light protected, piano lenses, or other lenses. Further examples of ophthalmic lens include active lens such as photochromic lens, electrochromic lens, fluidic lens, or liquid crystal lens; electronic lens, virtual reality (VR) lens, augmented reality (AR) lens, and the like.

An ophthalmic lens is generally manufactured in accordance with wearer specifications from an ophthalmic lens blank such as a semi-finished lens blank. A semi-finished lens blank generally has two opposite surfaces at least one of which is unfinished. The unfinished surface of the lens blank may be machined or edged according to the wearer's prescription to provide the required surface of the ophthalmic lens. An ophthalmic lens having finished back and front surfaces may be referred to as an uncut ophthalmic lens. In the case of an ophthalmic lens for the correction or improvement of eyesight, for example, the ophthalmic lens may be manufactured according to a wearer prescription corresponding to the visual requirements of that wearer. At least one of the surfaces of the ophthalmic lens may be processed to provide an ophthalmic lens according to the wearer prescription.

In embodiments in which the ophthalmic lens is supported by an eyewear frame, the shape and size of the eyewear frame supporting the ophthalmic lens may also be taken into account. For example, the contour of the uncut ophthalmic lens may be edged according to a shape of a spectacle frame on which the ophthalmic lens is to be mounted in order to obtain an edged or cut ophthalmic lens.

As mentioned above, an ophthalmic lens may be manufactured in accordance with wearer specifications and which may be processed to provide the ophthalmic lens with various functions. Accordingly, ophthalmic lens may have a complex structure resulting from interlayering of materials and/or a series of treatments to tailor the ophthalmic lens to specific user requirements. For example, the treatments may be carried out to reduce thickness and to render the ophthalmic lens lightweight, to improve on transparency, for durability, strength and protection, aesthetics etc. It follows that an ophthalmic lens may comprise one or more coatings disposed on a surface of a substrate functioning as an optical surface, such as an anti-breakage coating, an anti-scratch coating, an anti-reflection coating, a tint coating, a color coating, an antistatic coating, or an anti-smudge coating.

Accordingly, the term "optical surface" as used herein refers to surface of a substrate in the form of a bare ophthalmic lens without any coating disposed on the optical surface(s), such as an unfinished or untreated ophthalmic lens, as well as surface of a coating which may be designed to be temporarily or permanently disposed on the optical surface(s) of a bare ophthalmic lens. Examples of a coating that may be disposed on an ophthalmic lens have already been mentioned above, and may further include, but are not limited to, (1) topcoat, (2) anti-reflective (AR) coatings and asymmetrical mirrors, and/or (3) hardcoat (HC).

The ophthalmic lens disclosed herein comprises a first optical surface, an opposing second optical surface, and an edge surface connecting the first optical surface and the second optical surface.

In various embodiments, the first optical surface and the second optical surface may independently be a substrate, a substrate having a hard coat, or a substrate having a hard multi-coat (HMC) coating, i.e. an antireflective (AR) coating, a hardcoat (HC), and a topcoat disposed thereon. In various embodiments, the first optical surface and the second optical surface may respectively be a concave (Cc) surface and a convex (Cx) surface of the ophthalmic lens.

The first optical surface and the second optical surface are connected by an edge surface. As used herein, the term "edge surface" refers to a lateral flank and/or external contour of an ophthalmic lens, or a peripheral shape connecting the first optical surface and second optical surface of an ophthalmic lens. For example, the edge surface may define a surface on the lateral flank and/or external contour of an ophthalmic lens upon which a coating material is to be disposed.

The edge surface may be planar or non-planar. In embodiments disclosed herein, the edge surface is planar. By the term "planar", this means that the edge surface is a generally flat surface, and can include weakly bent or slightly curved surfaces. It follows that the edge surface may not have significant projections or depressions. In various embodiments, the edge surface is flat. The term "flat" is used herein to describe a surface that does not have a substantially varying surface normal angle across it. By this, it means that the surface normal angle at a specific location of the edge surface is kept within 10 %, such as within 8 %, within 5 %, or within 3 %, of the average surface normal angle across the edge surface.

In some embodiments, the edge surface is non-planar, and may include a lens bevel, a safety bevel, or both a lens bevel and a safety bevel. The term "lens bevel" refers generally to the edge of a lens shaped like a "V", and may help to secure the lens after it has been inserted in an eyewear frame. The term "safety bevel", on the other hand, refers to a flattening bevel ground on the external contour of the ophthalmic lens, which may be formed at an interface between the external contour and the optical faces of the ophthalmic lens, whereby the sharp edges have been removed for a safer lens. Accordingly, safety bevels may be used to eliminate any sharp edges on the lens as these can be dangerous for a user. The lens bevel and the safety bevel may constitute a profile on the edge surface.

The edge surface may furthermore be divided into a perimeter portion and a central portion. As used herein, the term "perimeter portion" refers to an area on an edge surface abutting an optical surface, such as that shown in **FIG. 3****.** Generally, an edge surface has a perimeter portion which is formed of two perimeter portion parts, with a first perimeter portion part on an edge surface abutting a first optical surface and a second perimeter portion part on an edge surface abutting a second optical surface. Accordingly, each perimeter portion part may be offset from an edge of the edge surface and be proximate to each optical surface.

In various embodiments, the perimeter portion of the edge surface covers 15 % or less of the entire surface area of the edge surface, such as 12 % or less, 10 % or less, 7 % or less, 5 % or less, 2 % or less of the entire surface area of the edge surface. In various embodiments, the perimeter portion of the edge surface covers 15 % or less of the entire surface area of the edge surface. The perimeter portion parts making up the perimeter portion may be the same or different in size.

The perimeter portion may be offset equally from an edge of the edge surface, and may have a width in the range of about 0.1 mm to about 1 mm, such as about 0.2 mm to about 1 mm, about 0.5 mm to about 1 mm, about 0.7 mm to about 1 mm, about 0.1 mm to about 0.8 mm, about 0.1 mm to about 0.6 mm, about 0.1 mm to about 0.5 mm, about 0.1 mm to about 0.4 mm, about 0.1 mm to about 0.3 mm, when measured from the edge. In embodiments wherein the perimeter portion is formed of a plurality of perimeter portion parts such as two perimeter portion parts, the width refers to the width of each perimeter portion part. In other words, each perimeter portion part may independently have a width in the range of about 0.1 mm to about 1 mm, such as about 0.1 mm to about 0.4 mm, or any of a width range mentioned above. In embodiments wherein the perimeter portion comprises a safety bevel, the safety bevel may generally have a width in the range from about 0.1 mm to about 0.4 mm. Accordingly, when the perimeter portion has a width of 1 mm, for example, up to 0.4 mm of the width may correspond to that of the safety bevel.

In some embodiments, the perimeter portion may be offset by a differing distance from an edge of the edge surface along perimeter of the ophthalmic lens face. In such embodiments, the width refers to that of the maximal width or the maximal distance as measured from the edge, and the width ranges mentioned above also applies.

The central portion, on the other hand, refers to an area on an edge surface which is distal from one or both of the first and second optical surfaces. Accordingly, the central portion of the edge surface is spaced apart from the first and second optical surfaces by the perimeter portion. In various embodiments, the central portion and the perimeter portion of the edge surface do not overlap, and add up to form the edge surface.

In embodiments wherein the edge surface is non-planar, the perimeter portion of the edge surface may comprise or correspond to a safety bevel, while the central portion of the edge surface may comprise a lens bevel.

As disclosed herein, a coating material is disposed on a central portion of the edge surface and on 50 % or less of a perimeter portion of the edge surface abutting one or both of the first optical surface and the second optical surface. Since the perimeter portion may generally be formed of two perimeter portion parts, this means that the coating material may be disposed on one or both the perimeter portion parts and/or to the same or a different extent, as long as 50% or less, such as 45 % or less, 40 % or less, 35 % or less, 30 % or less, 25 % or less, 20 % or less, 15 % or less, 10 % or less, 5 % or less, or 0 % of the perimeter portion's area is covered by the coating material.

In embodiments wherein the edge surface is planar, the coating material may be disposed on only a central portion of the edge surface.

Generally, the coating material is effective to reduce a reflection caused by a profile of the edge surface. It may also be effective to reduce a transmission of light through the edge surface. In other words, the coating material may have sufficient opacity so that transmission of light through the edge surface from both outside and within the lens is reduced. Coating materials according to embodiments disclosed herein are able to fulfil one or more of objectives of fast drying (at least within 2 to 3 hours), almost 100 % opacity, good mechanical performance, solvent resistance, and adhesion properties, and with matching refractive index of lens with majority of substrates.

The opacity of the coating material may be imparted from an opacity agent contained in the material. As used herein, the term "opacity agent" refers to a substance or an additive added to a material so as to reduce transparency or light transmittance through the material. In this regard, the material may function as a matrix for holding the opacity agent, and the opacity agent may be dispersed in the matrix.

In various embodiments, the opacity agent comprises a material selected from the group consisting of carbon black, an organic pigment, an inorganic pigment, titanium dioxide, calcium oxide, beryllium oxide, cerium oxide, barium sulphate, carbon nanotube, and a combination thereof.

The opacity agent may be dispersed in a matrix material. The term "matrix material" as used herein refers to any support, which may be liquid, semi-solid, or solid, for carrying the opacity agent and/or other components of the coating material. In various embodiments, the opacity agent is dispersed at least substantially homogeneously in the matrix material.

Examples of the matrix material may include, but is not limited to, a UV-curable composition such as acrylate, epoxy, unsaturated polymer, silane, styrene, vinyl chloride, vinyl acetate, a thermal-curable composition such as polyurethane (of which nitrocellulose modified polyurethane is one example), polyurea, epoxy, polyester, polyamide, polyimide, polyether, alkyd, polycarbonate, or a combination thereof. In various embodiments, the matrix material comprises a material selected from the group consisting of a polyurethane, an epoxy, an acrylate, cellulose acetate butyrate, silicone, a polyester, a copolymer thereof, and a combination thereof. In specific embodiments, the matrix material is a cross-linked polyurethane.

Weight ratio of the matrix material to the opacity agent may be in the range of about 1:0.05 to about 1:3, such as about 1:0.1 to about 1:3, about 1:0.5 to about 1:3, about 1:1 to about 1:3, about 1:1.5 to about 1:3, about 1:2 to about 1:3, about 1:2.5 to about 1:3, about 1:0.05 to about 1:2.5, about 1:0.05 to about 1:2, about 1:0.05 to about 1:1.5, about 1:0.05 to about 1:1, about 1:0.05 to about 1:0.5, about 1:0.05 to about 1:0.1, about 1:0.5 to about 1:2.5, or about 1:1 to about 1:2.

The various combinations of matrix material and opacity agent disclosed herein are examples of materials effective to reduce a reflection caused by a profile of the edge surface, and may also be effective to reduce a transmission of light through the edge surface.

In various embodiments, the coloring material comprises a photochromic material or a thermochromic material. These materials are able to introduce color changing capability on the edge of lenses with external stimuli such as ultraviolet radiation or thermal energy. This feature would be most beneficial for rimless frames, where in the switch on / switch off would result in transformation of 'no rim' to 'colored rim', or from one color to other color rim frame.

Photochromism may be described as a persistent, reversible color and/or opacity change of a material upon exposure to ultraviolet radiation. Examples of suitable photochromic material may include silver halides such as microcrystalline silver halides, and organic photochromic molecules such as oxazines and naphthopyrans. Other examples include, but are not limited to, spiropyran, azobenzenes, stilbenes, fulgides, azulenes, spiroperimidines, and/or hexaarylbiimidazole.

Thermochromism, on the other hand, may be described as a persistent, reversible color and/or opacity change of a material upon application of thermal energy to the material. Examples of suitable thermochromic material may include, but are not limited to, liquid crystals, conjugated oligomers, leuco dyes, and/or vanadium oxide.

As mentioned above, the coating material is disposed on a central portion of the edge surface and on 50 % or less of a perimeter portion of the edge surface abutting one or both of the first optical surface and the second optical surface. This means that the coating material may be disposed on the both the central portion and the perimeter portion, or on the central portion only and not disposed on the perimeter portion at all.

In various embodiments, a coating material is disposed on both the central portion and the perimeter portion of the edge surface abutting one or both of the first optical surface and the second optical surface.

The ophthalmic lens may, for example, be a negative lens, and the perimeter portion comprising a coating material disposed thereon may be proximal to a temporal side, a nasal side, or both a temporal side and a nasal side of an eyewear arranged to accommodate the ophthalmic lens.

By the phrase "proximal to the nasal side of the eyewear", it refers to a portion of the edge surface which overlaps or substantially overlaps with the face of the wearer when viewed from the front of the wearer, such as that shown in **FIG. 4** as "N". By the phrase "proximal to the temporal side of the eyewear", it refers to a portion of the edge surface which does not overlap with the face of the wearer when viewed from the front of the wearer, such as that shown in **FIG. 4** as "P1" and "P2". The wearer and the viewer may be directly facing each other in determining suitable "N", "P1" and "P2" values. Nevertheless, suitable "N", "P1" and "P2" values may also be determined with objective to optimize reduction in perceived thickness of the eyewear frame, by having the viewer positioned at an angle to the wearer.

Given that the edge surface that is proximal to a temporal side, a nasal side, or both a temporal side and a nasal side of an eyewear arranged to accommodate the ophthalmic lens of a negative lens are generally thicker hence more visible to a viewer, the perimeter portions at these positions may be coated with the coating material along with the central portions to reduce visibility of myopia rings, while leaving the perimeter portions of the other positions uncovered. Advantageously, visibility of myopia rings may not be affected unduly even though only a portion of the edge surface is coated. There may be reduction in incidence of overflow since a smaller percentage of the perimeters portion are subjected to the coating process. This translates into time and cost savings, further since less coating material is being used to form the edge coating.

As further examples, the ophthalmic lens may be a positive lens, and the perimeter portion comprising a coating material disposed thereon may be proximal to an upper side, a lower side, or both an upper side and a lower side of an eyewear arranged to accommodate the ophthalmic lens. The edge surface that is proximal to an upper side, a lower side, or both an upper side and a lower side of an eyewear arranged to accommodate the ophthalmic lens of a positive lens are generally thicker hence more visible to a viewer. Therefore, as in the case for negative lens, the perimeter portions at these positions may be coated with the coating material along with the central portions to reduce visibility of myopia rings, while leaving the perimeter portions of the other positions uncovered.

In some embodiments, the coating material may be disposed at an entire central portion of the edge surface. This allows an edge surface of the ophthalmic lens to be coated around its entire central portion. In various embodiments, the coating material is disposed on the central portion of the edge surface only. In some embodiments, the central portion of the edge surface comprises a lens bevel, and the coating material is disposed on a surface of the lens bevel only.

Various embodiments refer in a second aspect to an eyewear comprising an eyewear frame and an ophthalmic lens according to the first aspect. Examples of suitable eyewear have already been mentioned above.

Various embodiments refer in a third aspect to a method of coating an edge surface of an ophthalmic lens, the method comprising providing an ophthalmic lens comprising a first optical surface, an opposing second optical surface, and an edge surface connecting the first optical surface and the second optical surface. Examples of ophthalmic lens have already been described above.

The method disclosed herein comprises either (a) disposing a coating material on the edge surface, and physically working a perimeter portion of the edge surface abutting one or both of the first optical surface and the second optical surface so that 50 % or less of the perimeter portion comprises the coating material, or (b) disposing a coating material on a central portion of the edge surface only.

As mentioned above, the edge surface may be divided into a perimeter portion and a central portion. Descriptions and/or definitions regarding perimeter portion and central portion have already been provided above. In various embodiments, the perimeter portion of the edge surface covers 15 % or less, such as 12 % or less, 10 % or less, 7 % or less, 5 % or less, 2 % or less of the entire surface area of the edge surface.

In various embodiments, the method comprises disposing a coating material on the edge surface, and physically working a perimeter portion of the edge surface abutting one or both of the first optical surface and the second optical surface so that 50 % or less, such as 45 % or less, 40 % or less, 35 % or less, 30 % or less, 25 % or less, 20 % or less, 15 % or less, 10 % or less, 5 % or less, or 0 % of the perimeter portion comprises the coating material. By physically working a perimeter portion of the edge surface abutting one or both of the first optical surface and the second optical surface after edge coating has been carried out, one or more safety bevels may be formed on the ophthalmic lens while removing any overflows on the optical surfaces.

Physically working the perimeter portion of the edge surface may involve shaping the perimeter portion of the edge surface using a shaping tool, such as a grinder or a chamfering tool. Suitable shaping tools include, but are not limited to, an edging tool for edging lens, a tool for forming safety bevels on a lens, or a manual lens grinder. In so doing, some of the coating material which is disposed on the perimeter portion of the edge surface may be removed. Since the perimeter portion may generally be formed of two perimeter portion parts, this means that the coating material may be disposed on one or both the perimeter portion parts and/or to the same or a different extent, as long as 50% or less of the perimeter portion's area is covered by the coating material.

In some embodiments, physically working the perimeter portion of the edge surface is carried out such that the perimeter portion does not comprise the coating material disposed thereon.

In various embodiments, physically working the perimeter portion of the edge surface comprises chamfering the perimeter portion of the edge surface to form a safety bevel on the ophthalmic lens. In some embodiments, physically working the perimeter portion of the edge surface comprises chamfering the perimeter portion of the edge surface to form a respective safety bevel on an edge surface abutting the first optical surface and on an edge surface abutting the second optical surface. Dimensions of the safety bevel may depend on various factors such as customer requirements regarding the lens design, and amount of overflow on the optical surfaces. For example, if the extent of overflow is greater, the width of safety bevel may be adjusted accordingly so as to remove the overflow.

In various embodiments, the method disclosed herein may be used to coat an edge surface of an ophthalmic lens, wherein the ophthalmic lens is a negative lens, and physically working the perimeter portion of the edge surface is carried out so that the perimeter portion comprising the coating material disposed thereon is proximal to a temporal side, a nasal side, or both a temporal side and a nasal side of an eyewear arranged to accommodate the ophthalmic lens.

In various embodiments, the method disclosed herein may be used to coat an edge surface of an ophthalmic lens, wherein the ophthalmic lens is a positive lens, and physically working the perimeter portion of the edge surface is carried out so that the perimeter portion comprising the coating material disposed thereon is proximal to an upper side, a lower side, or both an upper side and a lower side of an eyewear arranged to accommodate the ophthalmic lens.

As mentioned above, the edge surface that is proximal to a temporal side and/or a nasal side of an eyewear arranged to accommodate the ophthalmic lens of a negative lens, as well as the edge surface that is proximal to an upper side and/or a lower side of an eyewear arranged to accommodate the ophthalmic lens of a positive lens, are generally thicker hence more visible to a viewer. Therefore, the perimeter portions at these positions may be coated with the coating material along with the central portions to reduce visibility of myopia rings, while leaving the perimeter portions of the other positions uncovered. This may have the effect that visibility of myopia rings is not affected unduly even though only a portion of the edge surface is coated.

In various embodiments, the method of coating an edge surface of an ophthalmic lens is carried out so that 0 % of the perimeter portion comprises the coating material. Accordingly, the method according to embodiments comprises disposing a coating material on a central portion of the edge surface only, and the perimeter portion is not coated with the coating material.

In various embodiments, the central portion of the edge surface comprises a lens bevel, and disposing the coating material on the central portion of the edge surface only comprises disposing the coating material on a surface of the lens bevel only. Examples are shown in **FIG. 8A** and **FIG. 8B****,** whereby the coating material is disposed on only a portion of the lens bevel surface.

In order that the invention may be readily understood and put into practical effect, particular embodiments will now be described by way of the following non-limiting examples.

### EXAMPLES

Processes that allow removing the myopia rings usually involve coloring the entire edge surface of the lens. A major difficulty encountered during this process is that it is almost impossible not to overflow from the edge surface when applying the ink / color.

A technical problem identified herein in the coloring process is to avoid or prevent overflow from the edge surface of the lens to the front / rear optical surfaces.

### Example 1: Overflow to front and back surfaces of ophthalmic lens

**FIG. 6A** to **FIG. 6E** are schematic diagrams showing a method of coating an edge surface of an ophthalmic lens, as disclosed herein. A cross-sectional view of the ophthalmic lens is depicted. **FIG. 6A** shows an ophthalmic lens 630. In **FIG. 6B****,** a coating applicator 650 is used to apply a coating material onto an edge surface of the ophthalmic lens 630 to result in formation of an edge coating 602 on the edge surface of the ophthalmic lens 630, with overflows 604 and 606 on the respective first optical surface and second optical surface of the ophthalmic lens 630 as shown in **FIG. 6C****.** A chamfering tool 660 is used to remove the overflows 604 and 606, while forming safety bevels on the ophthalmic lens 630 as shown in **FIG. 6D. FIG. 6E** shows an ophthalmic lens 630 comprising the edge coating 602, in which the overflows 604 and 606 have been removed, and safety bevels 6241 and 6242 are formed at the perimeter portion of the edge surface abutting the optical surfaces. **FIG. 6F** is a photograph corresponding to **FIG. 6C****,** showing an ophthalmic lens 630 which is held in place by a posiblock 670. An edge coating 602 was applied to the ophthalmic lens 630, and overflows 604 and 606, which resulted from the edge coating process, were formed. **FIG. 6G** is a photograph corresponding to **FIG. 6E****.** Safety bevels 6241 and 6242 are formed at the perimeter portion of the edge surface abutting the optical surfaces of the ophthalmic lens 630 following a chamfering process to remove the overflows 604 and 606.

### Example 2: Undercoating of edge surface of ophthalmic lens

**FIG. 7A** to **FIG. 7E** are schematic diagrams showing a method of coating an edge surface of an ophthalmic lens, as disclosed herein. **FIG. 7A** shows an ophthalmic lens 730. In **FIG. 7B****,** a coating applicator 750 is used to apply a coating material onto an edge surface of the ophthalmic lens 730 to result in formation of an edge coating 702 on the edge surface of the ophthalmic lens 730. The edge surface is undercoated, meaning that the coating material is not completely coated on the edge surface. For example, the coating material may be disposed on a central portion of the edge surface, and only partially on the perimeter portion of the edge surface at circled regions 798 and 799, as shown in **FIG. 7C****.** A chamfering tool 760 is used to form safety bevels at regions 798 and 799 on the ophthalmic lens 730 as shown in **FIG. 7D. FIG. 7E** shows an ophthalmic lens 730 comprising the edge coating 702 and safety bevels 7241 and 7242 formed at the perimeter portion of the edge surface abutting the optical surfaces. **FIG. 7F** is a photograph corresponding to **FIG. 7C****,** showing an ophthalmic lens 730 which is held in place by a posiblock 770. An edge coating 702 was applied to the ophthalmic lens 730. There was undercoating of the edge surface at perimeter regions 798 and 799 of the edge surface. **FIG. 7G** is a photograph corresponding to **FIG. 7E****.** Safety bevels 7241 and 7242 were formed at the perimeter portion of the edge surface abutting the optical surfaces of the ophthalmic lens 730 following a chamfering process to remove the undercoated regions 798 and 799.

### Example 3: Disposal of coating material on only a portion of the edge surface

The coating material may be disposed on a partial portion of the edge surface. For example, the coating material may be disposed at a portion of the edge surface which has a bigger area or which is relatively thick, where the myopia ring is most visible.

In embodiments wherein the ophthalmic lens is a negative lens, for example, the coating material may be disposed on a perimeter portion of the ophthalmic lens which is proximal to a temporal side, a nasal side, or both a temporal side and a nasal side of an eyewear arranged to accommodate the ophthalmic lens.

In embodiments wherein the ophthalmic lens is a positive lens, for example, the coating material may be disposed on a perimeter portion of the ophthalmic lens which is proximal to an upper side, a lower side, or both an upper side and a lower side of an eyewear arranged to accommodate the ophthalmic lens.

**FIG. 8A to 8D** provide illustrations of embodiments whereby the coating material is disposed on only a portion of the edge surface. For the embodiments shown in **FIG. 8A** and **FIG. 8B****,** the coating material is only disposed on a central portion of the edge surface, and is not disposed on the edge surface near the first optical surface and opposing second optical surface of the ophthalmic lens. As such, there is no overflow on the first optical surface and second optical surface, thus a chamfering process to remove the overflow from the first and second optical surfaces may not be required, except if an operator makes a mistake when disposing the coating material.

For the embodiments shown in **FIG. 8C** and **FIG. 8D****,** the coating material is disposed respectively on a portion of the edge surface near the first optical surface and the second optical surface of the ophthalmic lens. In these embodiments, a chamfering process to remove overflow from the first and second optical surfaces may be required in case there is overflow.

A grinder may be used to chamfer the safety bevel in Examples 1 and 2 disclosed herein. The angle to chamfer the bevel may range from 30 ° to 45 ° measured from a vertical axis, and may, for example, be about 45° for the back surface and 30° for the front surface. The actual angle to use may vary depending on the type of grinder/edger used since the angle may vary from one edger manufacturer to another; customer requirements, and further since the grinder wheel tends to be flexible which means that the angle may vary around the profile.

In addition or alternatively, a software feature may be implemented to increase size or load of the chamfering process.

At the moment, safety bevels made are up to 0.4 mm on the front and back optical surfaces. Sometimes with a specific tool design the bevel may be higher on the rear surface, for example, when being used to thin a thick negative lens.

Further developments or improvements may be made in terms of use of the posiblock, which is a consumable arranged on the lens to allow edging of the lens, and which may be used as a reference to perform the chamfering. An example is shown in **FIG. 5A****.** For example, it is advantageous for the posiblock to stay on and maintain continuous contact with the lens during the chamfering process. Otherwise, the edging reference for the machine may be lost if the posiblock is removed. This is because, even though another posiblock may be positioned on the lens, it may not be at the exact position as that carried out for the lens edging. As a result, more adjustments may be made so as to allow chamfering of the lens to form the safety bevels to be carried out, otherwise the safety bevels formed may be irregular along the perimeter of the lens.

In various embodiments, the initial edging parameters may be recorded to allow recall of this information when physical working of the perimeter portion of the edge surface is carried out. For example, the lens may be edged using an edging equipment, otherwise termed herein as an edger, and the color edge process to form the safety bevels may be carried out on another edger. If overflow on the edger needs to be reworked, recording of the initial edging parameters would allow them to be recalled so that the reworking may be carried out. On the other hand, it may be possible for the coating to be carried out directly in the edger or edging machine. As a consequence, it is not necessary to record the job parameters in such situations.

By "comprising" it is meant including, but not limited to, whatever follows the word "comprising". Thus, use of the term "comprising" indicates that the listed elements are required or mandatory, but that other elements are optional and may or may not be present.

By "consisting of" is meant including, and limited to, whatever follows the phrase "consisting of". Thus, the phrase "consisting of" indicates that the listed elements are required or mandatory, and that no other elements may be present.

By "about" in relation to a given numerical value, such as for temperature and period of time, it is meant to include numerical values within 10% of the specified value.

The invention has been described broadly and generically herein. Each of the narrower species and sub-generic groupings falling within the generic disclosure also form part of the invention. This includes the generic description of the invention with a proviso or negative limitation removing any subject matter from the genus, regardless of whether or not the excised material is specifically recited herein.

Other embodiments are within the following claims and non-limiting examples. In addition, where features or aspects of the invention are described in terms of Markush groups, those skilled in the art will recognize that the invention is also thereby described in terms of any individual member or subgroup of members of the Markush group.

Although representative processes and articles have been described in detail herein, those skilled in the art will recognize that various substitutions and modifications may be made without departing from the scope of what is described and defined by the appended claims.

## Claims

1. An ophthalmic lens comprising a first optical surface, an opposing second optical surface, and an edge surface connecting the first optical surface and the second optical surface, the ophthalmic lens further comprising a coating material disposed on a central portion of the edge surface and on 50 % or less of a perimeter portion of the edge surface abutting one or both of the first optical surface and the second optical surface.

2. The ophthalmic lens according to claim 1, wherein the edge surface is planar.

3. The ophthalmic lens according to claim 1, wherein the perimeter portion of the edge surface comprises a safety bevel.

4. The ophthalmic lens according to any one of claims 1 to 3, wherein the perimeter portion of the edge surface covers 15 % or less of the entire
surface area of the edge surface.

5. The ophthalmic lens according to any one of claims 1 to 4, wherein the coating material is disposed on both the central portion and the perimeter portion of the edge surface abutting one or both of the first optical surface and the second optical surface.

6. The ophthalmic lens according to claim 5, wherein the ophthalmic lens is
(i) a negative lens, and the perimeter portion comprising a coating material disposed thereon is proximal to a temporal side, a nasal side, or both a temporal side and a nasal side of an eyewear arranged to accommodate the ophthalmic lens, or
(ii) a positive lens, and the perimeter portion comprising a coating material disposed thereon is proximal to an upper side, a lower side, or both an upper side and a lower side of an eyewear arranged to accommodate the ophthalmic lens.

7. The ophthalmic lens according to any one of claims 1 to 4, wherein the coating material is disposed on the central portion of the edge surface only.

8. The ophthalmic lens according to claim 7, wherein the central portion of the edge surface comprises a lens bevel, and the coating material is disposed on a surface of the lens bevel only.

9. An eyewear comprising an eyewear frame and an ophthalmic lens according to any one of claims 1 to 8.

10. A method of coating an edge surface of an ophthalmic lens, the method comprising providing an ophthalmic lens comprising a first optical surface, an opposing second optical surface, and an edge surface connecting the first optical surface and the second optical surface; and either
a) disposing a coating material on the edge surface, and physically working a perimeter portion of the edge surface abutting one or both of the first optical surface and the second optical surface so that 50 % or less of the perimeter portion comprises the coating material, or
b) disposing a coating material on a central portion of the edge surface only.

11. The method according to claim 10, wherein physically working the perimeter portion of the edge surface comprises chamfering the perimeter portion of the edge surface to form a safety bevel on the ophthalmic lens.

12. The method according to claim 10 or 11, wherein the perimeter portion of the edge surface covers 15 % or less of the entire surface area of the edge surface.

13. The method according to any one of claims 10 to 12, wherein physically working the perimeter portion of the edge surface is carried out such that the perimeter portion does not comprise the coating material disposed thereon.

14. The method according to any one of claims 10 to 12, wherein the ophthalmic lens is
(i) a negative lens, and physically working the perimeter portion of the edge surface is carried out so that the perimeter portion comprising the coating material disposed thereon is proximal to a temporal side, a nasal side, or both a temporal side and a nasal side of an eyewear arranged to accommodate the ophthalmic lens, or
(ii) a positive lens, and physically working the perimeter portion of the edge surface is carried out so that the perimeter portion comprising the coating material disposed thereon is proximal to an upper side, a lower side, or both an upper side and a lower side of an eyewear arranged to accommodate the ophthalmic lens.

15. The method according to claim 10, wherein the central portion of the edge surface comprises a lens bevel, and disposing the coating material on the central portion of the edge surface only comprises disposing the coating material on a surface of the lens bevel only.
